(19) Europäisches Patentamt
European Patent Office
Office européen des brevets

(11) EP 0 529 588 B1

(12) # EUROPEAN PATENT SPECIFICATION

(45) Date of publication and mention
of the grant of the patent:
**27.05.1998 Bulletin 1998/22**

(51) Int Cl.[6]: **H04N 7/24**, H04N 7/30

(21) Application number: **92114483.8**

(22) Date of filing: **25.08.1992**

(54) **Image encoding apparatus**

Einrichtung zur Bildkodierung

Dispositif codeur d'images

(84) Designated Contracting States:
**DE FR GB NL**

(30) Priority: **28.08.1991 JP 217346/91**

(43) Date of publication of application:
**03.03.1993 Bulletin 1993/09**

(73) Proprietor: **SHARP KABUSHIKI KAISHA
Osaka-shi, Osaka-fu 545 (JP)**

(72) Inventors:
- **Katata, Hiroyuki
  Nara-shi, Nara-ken (JP)**
- **Akagi, Hiroshi
  Nara-shi, Nara-ken (JP)**
- **Noguchi, Yoji
  Nakatomigaoka Nara-shi Nara-ken (JP)**

(74) Representative: **Müller, Frithjof E., Dipl.-Ing.
Patentanwälte
MÜLLER & HOFFMANN,
Innere Wiener Strasse 17
81667 München (DE)**

(56) References cited:
EP-A- 0 385 654          EP-A- 0 409 602
EP-A- 0 473 384          EP-A- 0 495 501
US-A- 4 722 003

- **DIGITAL PICTURE PROCESSING SECOND EDITION vol. 1 , 1982 A. ROSENFELD AND A. C. KAK**
- **IEEE TRANSACTIONS ON COMMUNICATIONS SYSTEMS vol. CS-11 , September 1963 pages 289 - 296 J.J.Y. HUANG ET AL. 'Block quantization of correlated gaussian random variables'**
- **IEEE TRANSACTIONS ON ACOUSTICS, SPEECH, AND SIGNAL PROCESSING vol. 36, no. 9 , September 1988 pages 1445 - 1453 Y. SHOHAM ET AL. 'Efficient bit allocation for an arbitrary set of quantizers'**
- **IEEE TRANSACTIONS ON INFORMATION THEORY vol. 14, no. 5 , September 1968 pages 650 - 661 P.A. WINTZ AND A.J. KURTENBACH 'Waveform error control in PCM telemetry'**
- **PROCEEDINGS OF THE DIXIEME COLLOQUE SUR LE TRAITEMENT DU SIGNAL ET SES APPLICATIONS May 1985 , NICE pages 815 - 820 XP11595 S. MULLER 'Etude comparative de plusieurs algorithmes adaptatifs de compression d'image par transformation unitaire'**
- **IEEE TRANSACTIONS ON ACOUSTICS, SPEECH, AND SIGNAL PROCESSING vol. 35, no. 5 , May 1987 pages 614 - 617 A.M. BRUCKSTEIN 'On "Soft" bit allocation'**

**Description**

BACKGROUND OF THE INVENTION

1. Field of the Invention

This invention relates to an image encoding device which is capable of encoding time-varying images with high efficiency.

2. Description of the Related Art

In recent years, there has been proposed an image encoding device using a encoding method which divides a digital time-varying image into small blocks in a fixed range in a plane of the image such as a frame or a field, and adaptively distributes the amounts of information to the small blocks.

As an example of the above-mentioned encoding method, it is considered that in case of quantizing each transformation coefficient by transforming each block with a two-dimensional orthogonal transformation, blocks with small variance are encoded with small bit numbers and blocks with large variance are encoded with large bit numbers.

In encoding the time-varying images, particularly, in encoding a video tape recorder (VTR) of a digital system, it is necessary to code each frame by a fixed quantity of codes. To this end, it is important to control a quantity of data adequately.

In the following part, a data quantity control method utilized in the above-mentioned encoding device will be described in details.

Now consider a way of assigning a value of any one of 0, 1, 2 ..., L-1 (L is a positive integer) to each block as a bit number assignment function value.

An initial bit number assignment is obtained by using the equation (1) according to the variance in each block and/or a value of the dynamic range.

$$b_0 (i) = f (v (i)) \tag{1}$$

where i is representing a number, ie index, of a block ($i = 0, 1, ..., N\text{-}1$; N represents a total number of blocks), $b_0 (i)$ is representing an initial bit assigning function, $f(x)$ is representing a monotone increasing function of x, and $v(i)$ is representing the variance in the block and/or the dynamic range.

For example, when $v(i)$ is the data variance in the block, the equation (2) is used as the monotone increasing function $f(x)$, and when $v(i)$ is the dynamic range of pixel values in the block, the equation (3) is used as the monotone increasing function $f(x)$,

$$f (x) = a*\ln (x) \tag{2}$$

$$f (x) = a*x \tag{3}$$

where the factor a represents a constant.

The above-mentioned initial bit number assigning function $b_0(i)$ relatively represents a quantity of information in an i-th block, and values of the initial bit number assigning function $b_0(i)$ are generally not integral values and sometimes do not exist in the range of values from 0 to L-1. Also, the total sum of $b_0(i)$ in one field is not fixed.

In order to restrict the bit number assignment to integer values of 0 to L-1, and to make the total sum to be a constant, it is necessary to modify the initial bit assigning function $b_0(i)$ for satisfying the equation (4).

An outline of the above-mentioned modification method will be described.

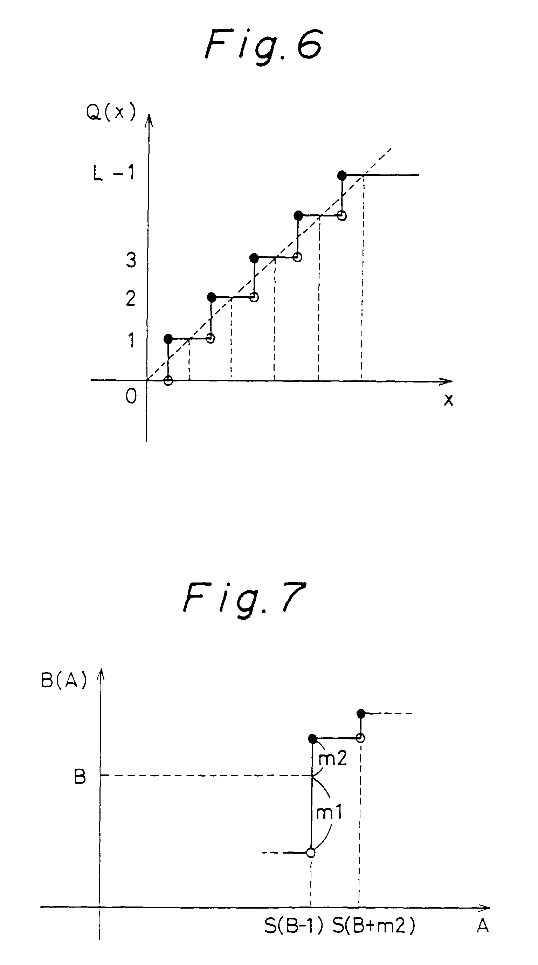

As shown in the equation (4), if the number of bits is expressed as a function of a parameter A, the total sum of bits is a function of the parameter A as shown in the equation (5). Here, Q(x) is a quantizing function for quantizing the values of x in the L levels uniformly, as shown in Fig. 6.

$$b(i, A) = Q(b_0 (i) +A) \tag{4}$$

where i = 0, 1, ..., N-1,

$$\sum_{i=0}^{N-1} b(i, A) = B(A) \qquad \ldots (5)$$

When the parameter A is selected such that the bit quantity B(A) is equal to a given total bit quantity B, and subsequently, the bit numbers are assigned to each block according to the equation (4), then an accurate bit quantity control can be performed.

When the coefficients a (i, j) defined by the equation (6) and rearranged in an ascending order are denoted as S (k) (k is a smaller integer than N∗(L-1)), then the bit quantity B(A) is as shown in Fig. 7.

$$a(i, j) = -b_0(i) + 1/2 + j \qquad (6)$$

where i = 0, 1, ..., N-1; j = 0, 1, ..., L-2.

When m2 = 0, the equation (7) is defined as,

$$d1 = [S(B) - S(B - 1)]/2 \qquad (7)$$

When m2 > 0, among (m1+m2) initial bit assigning functions $b_0(i)$, which satisfy the equation (8),

$$a(i, j) = S(B - 1) \qquad (8)$$

m2 functions $b_0(i)$ are reduced by the amount described in the equation (9),

$$d2 = [S(B + m2) - S(B + m2 - 1)]/2 \qquad (9)$$

and d1 is represented by the following equation (10),

$$d1 = d2/2 \qquad (10)$$

then, a desired parameter A is given by the equation (11) as

$$A = S(B - 1) + d1 \qquad (11)$$

The function b (i, A) is calculated by using the thus obtained parameter A in the above-mentioned equation (4). By setting this function a bit assigning resulting in B as the total bit quantity is obtained.

In the modification method used by the above-mentioned image encoding device, a number of N x (L - 1) rearrangements in an ascending order need to be performed. For example, when an image consisting of 512 x 512 pixels is divided into blocks of 8 x 8 pixels, the total number N of blocks amounts to 4096, and when L = 8, N x (L - 1) is equal to 28672, and a great many numbers must be rearranged for each encoding operation, thereby, a hardware with a large-scale structure is required.

The EP-A-0 409 602 discloses a highly efficient coding apparatus for coding digital video data in a block format. This apparatus selects a set of threshold values (T1, T2, T3 and T4) from prepared sets of values in accordance with a histogram of an input image, then a parameter code P is determined. Each of the values in the set of threshold values (T1, T2, T3 and T4) corresponds to a dynamic range of the pixel values in the block. The assigned number n of coded bits is determined based on the magnitude relationship between the dynamic range (DR) and the set of threshold values (T1 to T4).

The EP-A-0 385 654 discloses a highly efficient coding apparatus for coding AC components in a mode selected from seven prepared modes (mode 1 to mode 7). The mode is selected so that the transmission bit number per field does not exceed a predetermined value for an object. The histogram of Fig. 10A is used for obtaining the accumulated graph, Fig. 10B is used for determining the number of sub-blocks to be sent.

## SUMMARY OF THE INVENTION

It is therefore an object of the present invention to provide an image encoding device which is capable of rearranging only predetermined numbers in an encoding process and capable of structuring a hardware in a compact form.

The object of the present invention can be achieved by an image encoding device for transforming an input digital image signal into an encoded image output signal by dividing the image signal into a plurality of blocks of pixel value signals, characterized in that the device comprises: a unit for assigning an initial information distribution value to said each block as a function of pixel value signals, and for obtaining a rank table $k(m, j)$ showing ascending rankings of ranks $k$ each calculated from a value of a variable relating to the initial information distribution value, wherein $m=0$, $1, ..., M-1$, $j=0, 1, ..., L-2$, M is the number of assignable initial information distribution values, and L is the number of bit assignment values ranging from 0 to L-1 and assignable to said initial information distribution value; a unit for forming a histogram of said ranks $k$ in accordance with ascending rankings using said rank table $k(m, j)$, a rank $k(m, j)$ being a rank counted in an ascending order from smallest values of said variable; a unit for determining a parameter $k'$ from the histogram to control, for said each block, the number of encoded bits employed in the image output signal, the parameter $k'$ being a minimum rank at which an accumulated value sum of the histogram equals or exceeds a total bit number, and the bit assignment is:

0 for $k' < k(m, 0)$,
$j+1$ ($j=0, 1, ..., L-3$) for $k(m, j) \leq k' < k(m, j+1)$,
L-1 for $k(m, L-2) \leq k'$.

Said variable is preferably a variable $A(m, j)$ being expressed regardless of said input image signal as:

$$A(m, j) = -\beta (m) + 1/2 + j,$$

wherein $m=0, 1, ..., M-1$, $j=0, 1, ..., L-2$, $\beta (m)$ is said initial bits assigned to a certain block, and M and L are integers.

More preferably, said assigning unit is an arithmetic unit for calculating quantizing indices by quantizing accumulated values of the variable to predetermined levels.

Further preferably, said forming unit is a counter for forming histograms of accumulated values of the variable in a fixed range of the image.

The fixed range is preferably any one of a field, frame and other area in an image.

Still further preferably, said determining unit includes an accumulator for obtaining a minimum accumulated value of the variable which satisfies a predetermined relational expression while accumulating said formed histogram in ascending order of values of the variable.

The determining unit further preferably includes a bit assigning unit for assigning bits to each of said blocks in a fixed range of said image according to minimum values of the variable obtained by said accumulator.

In operation, the arithmetic operation unit calculates a distributed value of the amount of information about each block as a function of pixel value, the histogram forming unit, connected to the arithmetic operation unit, quantizes the distributed values of the amounts of information, and thereby forms a histogram, and the unit for deciding a parameter according to a value of a variable satisfying a specified equation, the value of the variable satisfying the equation being found while accumulating values of the variable constituting the histogram in an ascending order of the values.

Therefore, it is not necessary to rearrange the values of the histogram in an ascending order, so that the size of hardware can be reduced.

## BRIEF DESCRIPTION OF THE DRAWINGS

Fig. 1 is a block diagram showing a structure of an embodiment of an image encoding device according to the present invention;
Fig. 2 is a flowchart for explaining an operation of the counting part in Fig. 1;
Fig. 3 is a flowchart for explaining an operation of the accumulator in Fig. 1;
Fig. 4 is a graph showing an example of output by the accumulator in Fig. 3;

Fig. 5 is a flowchart for explaining an operation of the bit assigning unit in Fig. 1;

Fig. 6 is a graph of the quantizing function Q(x) ; and

Fig. 7 is a graph showing the relation between the parameter A and the total bit number.

## DESCRIPTION OF THE PREFERRED EMBODIMENTS

Referring to the accompanying drawings, an embodiment of an image encoding device according to the present invention will be described in details.

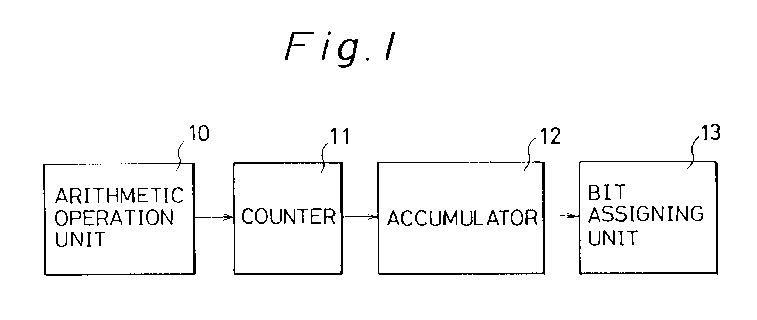

Fig. 1 is a block diagram showing an arrangement of an embodiment of the image encoding device according to the present invention.

As shown in Fig. 1, the image encoding device includes an arithmetic operation unit 10 serving as arithmetic means for calculating quantizing indices by quantizing variables to predetermined levels, a counter 11 connected to the arithmetic operation unit 10 and serving as histogram forming means for forming histograms of variables in a fixed range of an image such as an input field, frame or other area in an image, an accumulator 12 connected to the counter 11 and serving as a part of the parameter determining means for obtaining a minimum variable which satisfies a predetermined relational expression while accumulating the formed histogram in ascending order of the variables, and a bit assigning unit 13 connected to the accumulator 12 and serving as the other part of the parameter deciding means for assigning bits to each block in the fixed range of the image such as a field, frame or other area in an image according to the minimum variable obtained by the accumulator 12.

Each of the above-mentioned components will be described in more details.

First of all, an operation of the arithmetic operation unit 10 is described below.

When the kinds of the initial bit assigning function $b_0(i)$ for indicating an initial bit assignment (hereafter referred to as the function) is M (M is a positive integer satisfying a condition M > L), then the m-th value is denoted by $\beta(m)$ as described in the equation (12).

$$b_0(i) \in \{\beta(m) \mid m = 0, 1, ..., M\text{-}1\} \qquad (12)$$

This is equivalent to quantize the function $b_0(i)$ to M level. For example, in a digital image in which each pixel is expressed by eight bits, when the initial bit assignment is obtained according to the above-mentioned equation (3) by using the dynamic ranges of pixel values in a block, since there are 256 kinds of dynamic ranges the kinds M of the function $b_0(i)$ is also 256. For example, the kinds M can be made 32 by quantizing in a much coarse level.

Even when the initial bit assignment is obtained according to the equation (2) by using a variance of the pixel values in a block, it is only required to quantize the function $b_0(i)$ with adequate level numbers.

The variable a (i, j) defined by the above-mentioned equation (6) becomes a value equal to any one of the variable A (m, j) of the equation (13).

$$A (m, j) = \text{-}\beta(m) + 1/2 + j \qquad (13)$$

where m = 0, 1, ..., M-1, and j = 0, 1, ..., L-2.

A rank counted in an ascending order from the smallest values of the variable A(m, j) is set as the rank k (m, j) (k (m, j) = 0, 1, ...).

However, when the value of the variable A (m, j) is the same for different (m, j), the value of the rank k (m, j) is set to be the same. A table showing this rank k (m, j) must be prepared beforehand.

The values of the variable A (m, j) can be calculated in advance regardless of images. Therefore, the rank k (m, j) can be calculated in advance by rearranging the values of M x (L -1) in an ascending order from the smallest values.

When the initial assignment of bits to a certain block is expressed as a function $\beta(m)$, the counter 11 in Fig. 1 counts the histogram hist (k (m, j)) for j=0,1,...,L-2, and performs this operation with respect to each block.

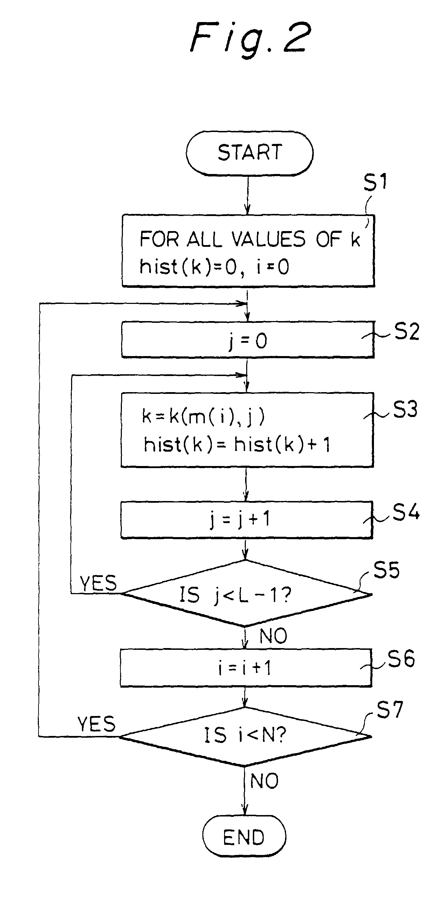

An operation of the counter 11 is described with reference to Fig. 2.

The counter 11 is operated with the steps of initializing the histogram hist (k) and then setting the block number i as i = 0 (step S1), setting the j as j = 0 (step S2), counting the histogram hist (k) by obtaining the rank k of the variable A (m, j) (step S3). In Fig. 2, m(i) indicates a quantizing index of initial bit assignment for the i-th block.

Then, setting j = j + 1 by adding 1 to j (step S4), determining whether or not j obtained at step S4 is smaller than L-1 (step S5), and when the determining result at step S5 is YES, i.e., that j is smaller than L-1, then the process returns to step S3, or in when the determining result at step S5 is NO, the process advances to step S6.

Moreover, setting i = i + 1 by adding 1 to i (step S6), determining whether or not i obtained at step S6 is smaller than N (step S7), and when the determining result is YES, that is, i is smaller than N, the process returns to the step S2, or when the determining result is NO, then the counting process of the histogram hist (k) is ended.

The accumulator 12 in Fig. 1 accumulates the histogram hist (k) in an ascending order from the smallest of the rank k, and obtains the minimum rank k' which satisfies the equation (14).

$$\sum_{k=0}^{k'} \text{hist} (k (m, j)) \geq B \quad \ldots (14)$$

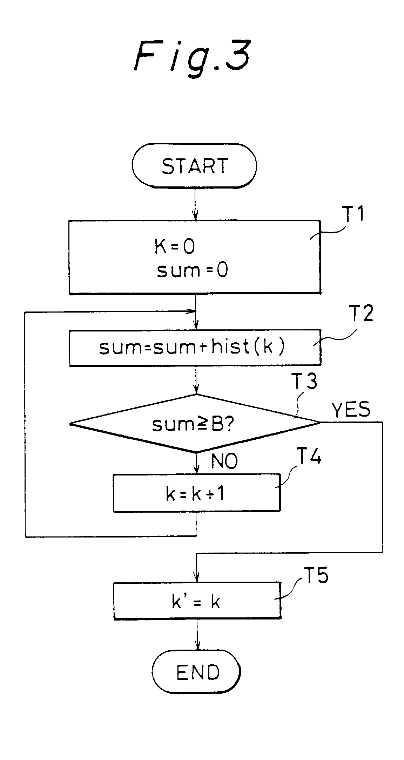

The operation of the accumulator 12 is described with reference to a flowchart in Fig.3.

The accumulator 12 is operated with the steps of setting the rank k=0 and the accumulated value sum=0 by initializing the rank k and the accumulated value sum (step T1), calculating the accumulated value sum = sum + hist (k) by adding the histogram hist (k) to the accumulated value sum (step T2), determining whether or not the accumulated value sum obtained at step T2 is equal to or greater than the total bit number B (step T3), when the accumulated value sum is less than the total bit number B at the step T3, then adding 1 to the rank k and returning to the step 2 (step T4), or when the accumulated value sum is equal to or greater than the total bit number B, setting the rank k' = rank k and terminating the process for obtaining the rank k' (step T5).

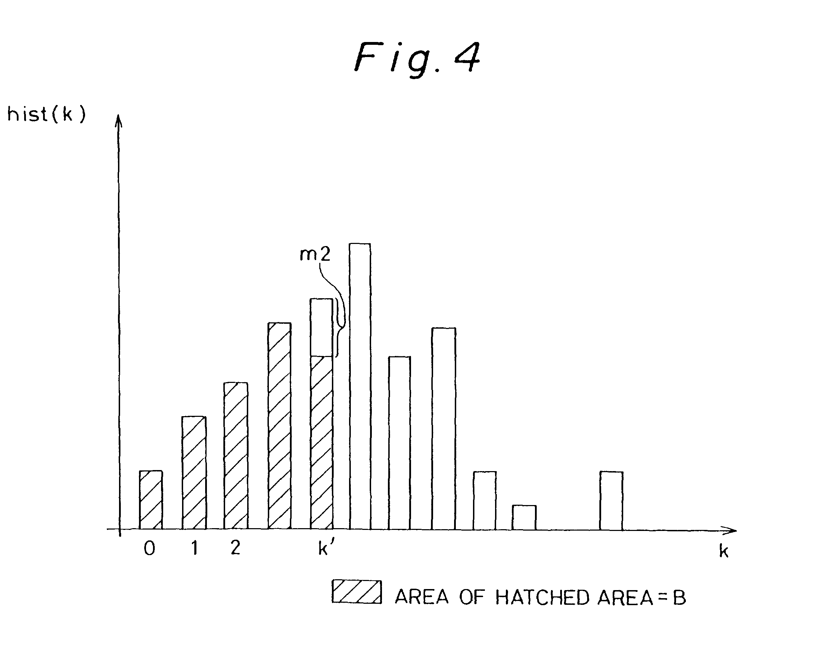

Fig.4 is a graph showing the relation among the histogram hist (k) at the rank k of the variable A (m, j), the total bit number B, and the rank k'. In Fig. 4, the hatched area equals the total bit number B, and m2 can be obtained according to the following equation (15).

$$m2 = \sum_{k=0}^{k'} \text{hist} (k (m, j)) - B \quad \ldots (15)$$

The bit assigning unit 13 in Fig. assigns bits to each block in the fixed range of the image, as described briefly in the following.

When the above-mentioned m2 is m2=0, then set as the equation (16) as shown below.

$$d1 = [A (k' + 1) - A(k')] /2 \tag{16}$$

The parameter A(k') indicates the value at the rank k' when the values of the variable A(m, j) are rearranged in an ascending order from the smallest value.

When m2 > 0, among the blocks which satisfy the equation (17),

$$k (m, j) = k' \tag{17}$$

m2 functions $b_0(i)$ are reduced by an amount described with the equation (18),

$$d2 = [A (k' + 1) - A(k')] /2 \tag{18}$$

into the equation (19),

6

$$d1 = d2/2 \qquad (19)$$

In this case, the following equation (20)

$$A = A(k') + d1 \qquad (20)$$

is the parameter A(k') to be obtained.

By using the thus obtained parameter A(k') in the above-mentioned equation (4) and setting the obtained result as b(i), then the bit assigning function b(i) of the total bit quantity B is obtained.

In practice, the distribution of bits to each block is performed on a basis of Table 1.

Table 1

| Ranges of k' | Bit Assignment |
|---|---|
| k' < k (m, 0) | 0 |
| k (m, j) ≤ k' < k (m, j+1) | j+1 (j=0, 1,...., L-3) |
| k (m, L-2) ≤ k' | L-1 |

When the value of m2 is positive, the bit distribution to the m2 block which satisfies the equation (17) for one j should be set to a value smaller by 1 than the value determined according to the Table 1.

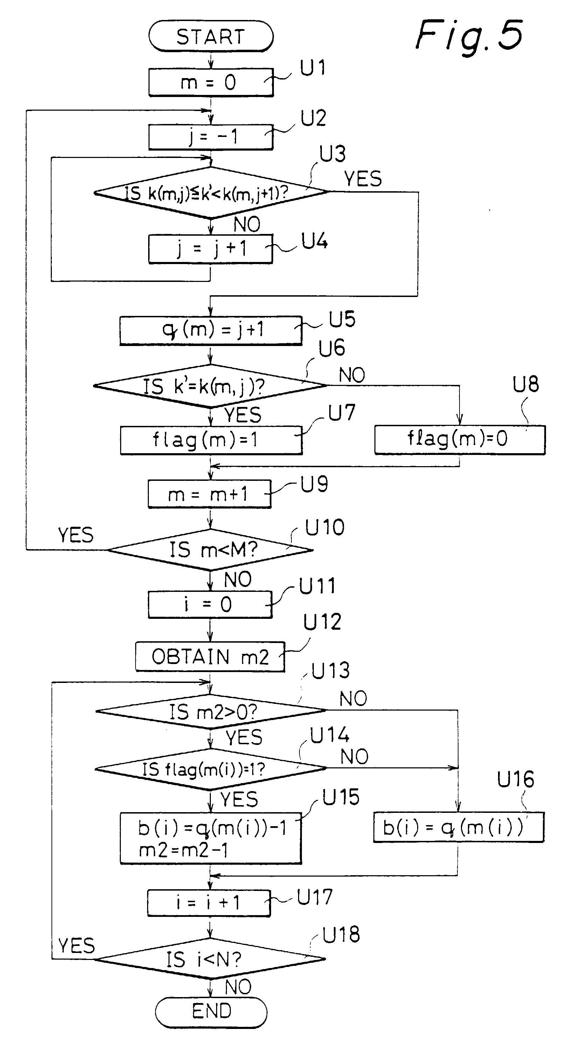

The operation of the bit assigning unit 13 is described with reference to a flowchart in Fig. 5.

Steps from U1 to U10 constitute a flow to obtain a bit assigning q(m) with respect to the quantizing index m of the initial bit assignment according to Table 1.

For m which satisfies the equation (17), a function flag (m) is set as flag (m) = 1.

The bit assigning unit 13 is operated with the steps of initializing m to m = 0 (step U1), initializing j to j = -1 (step U2), determining whether or not the rank k' obtained by the accumulator 12 in Fig. 1 is equal to and greater than the rank k (m, j) and further smaller than the rank (m, j+1) (step U3), when the determining result at step U3 is YES, then the process advances to step U5 to be described later, or when the determining result at step U3 is NO, then j is incremented by one to j = j+1 (step U4), the process returns to the above-mentioned step U3 to check the range of the rank k', setting the bit assigning q(m) for m to q(m) = j+1 (step U5). The values of k(m, j) for j = -1, j = L-1 are expressed as in the equations (21), (22), respectively.

$$k(m, -1) = -1 \qquad (21)$$

$$k(m, L-1) = k(m, L-2) + 1 \qquad (22)$$

Then, determining whether or not the equation (17) is satisfied (step U6), when the equation (17) is satisfied according to the determining result at the step U6, then setting the function flag (m) to flag (m) = 1 (step U7), or when the equation (17) is not satisfied, setting the function flag (m) to flag (m) = 0 (step U8), setting m = m+1 by adding 1 to m (step U9), determining whether or not m is smaller than M (step U10), when m is smaller than M according to the determining result at the step U10, then returning to the step U2, or when m is not smaller than M, then proceeding to the step U11.

The subsequent steps U11 to U18 constitute a flow for actually assigning bits to each block.

The flow constitutes the steps of initializing i (step U11), obtaining m2 according to the equation (15) (step U12), determining whether or not m2 is positive (step U12), when m2 is a positive according to the determining result at the step U12, then proceeding to the step U14 to be described later, or when m2 is not positive, then proceeding to the step U16 to be described later, also (step U13), determining whether or not the function flag (m(i)) is 1 (step U14), when the function flag (m(i)) is 1 at the step U14, then assigning the value smaller by 1 than the value in Table 1 as a bit number (step U15), when the function flag (m(i)) is not 1, then assigning the bit number according to the Table 1 (step U16).

Following the step U15 and the step U16, adding 1 to i as i = i + 1 (step U17), determining whether or not i is smaller than N (step U18), when i is smaller than N at the step U18, then returning to the step U13, or when the i is not smaller than N at the step U18, then terminating the process for assigning bits to the blocks.

In the method just described above, when m2 > 0, the first m2 blocks are selected from the blocks with the function flag (m(i)) being flag (m(i)) = 1 as blocks which make the number of bits assigned to be smaller by 1 than the number given in the Table 1. However, it is possible to select at random m2 blocks from the blocks with flag (m(i))) being equal to 1.

In the embodiment described above, any one value of 0, 1, ..., L-1 is assigned to each block as a number of bits. However, this method can be applied to a case in which any one of values described in the equation (23),

$$c, c+d, c+2*d, ..., c+(L-1)*d \tag{23}$$

That is, an assignment to the i-th block is set to be the function b'(i) and the total sum is set to be B'.

By using the method described above, any one of values 0, 1,..., L-1 is assigned to each block as the function b(i) by obtaining the total bit quantity B represented by the equation (24). An actual bit assigning function b'(i) can be obtained by the equation (25).

$$B = (B' - c*N)/d \tag{24}$$

$$b'(i) = b(i)*d+c \tag{25}$$

In the fore-mentioned known encoding device, the variables a (i, j) are rearranged in an ascending order from the smallest value and the B-th value is obtained after calculating them in a fixed range such as a frame or a field.

However, according to the present invention, the rank k corresponding to the variable a (i, j) is obtained by referring to the table for the rank k(m, j) which is made available in advance, and a histogram hist(k) for the rank k is formed in the fixed range such as a frame, field or other area in an image, the accumulated values of the histogram hist(k) are calculated from the smallest value, the value k' which is the smallest value of the rank k at which the accumulated value is equal to or greater than B is obtained, and then by calculating the value of A corresponding to this rank k', the parameter A used for assigning the number of bits can be obtained without rearranging the variables a (i, j) in an ascending order from the smallest value in an actual encoding.

## Claims

1.  An image encoding device for transforming an input digital image signal into an encoded image output signal by dividing the image signal into a plurality of blocks of pixel value signals,
    **characterized in that** the device comprises:

    means (10) for assigning an initial information distribution value to said each block as a function of pixel value signals, and for obtaining a rank table k(m, j) showing ascending rankings of ranks k each calculated from a variable relating to the initial information distribution value,
    wherein m=0, 1, ..., M-1, j=0, 1, ..., L-2, M is the number of assignable initial information distribution values, and L is the number of bit assignment values ranging from 0 to L-1 and assignable to said initial information distribution value;
    means (11) for forming a histogram of said ranks k in accordance with ascending rankings using said rank table k(m, j), a rank k(m, j) being a rank counted in an ascending order from smallest values of said variable;
    means (12, 13) for determining a parameter k' from the histogram to control, for said each block, the number of encoded bits employed in the image output signal, the parameter k' being a minimum rank at which an accumulated value sum of the histogram equals or exceeds a total bit number, and wherein the bit assignment is:
    0 for k'<k(m, 0),
    j+1 (j=0, 1, ..., L-3) for k(m, j)≤k'<k(m, j+1),
    L-1 for k(m, L-2)≤k'.

2.  An image encoding device according to claim 1, **characterized in that** said variable is a variable A(m, j) being expressed regardless of said input image signal as:

$$A(m, j) = -\beta (m) + 1/2 + j,$$

wherein m=0, 1, ..., M-1, j=0, 1, ... L-2, β (m) is said initial bits assigned to a certain block, and M and L are integers.

3. An image encoding device according to claim 1 or 2, **characterized in that** said means for assigning (10) is an arithmetic unit for calculating quantizing indices by quantizing accumulated values of the variable to predetermined levels.

4. An image encoding device according to any one of claims 1 to 3, **characterized in that** said means for forming (11) is a counter for forming histograms of accumulated values of the variable in a fixed range of the image.

5. An image encoding device according to claim 4, **characterized in that** said fixed range is any one of a field, frame and other area in an image.

6. An image encoding device according to any one of claims 1 to 5, **characterized in that** said means for determining (12, 13) includes an accumulator (12) for obtaining a minimum accumulated value of the variable which satisfies a predetermined relational expression while accumulating said formed histogram in ascending order of values of the variable.

7. An image encoding device according to claim 6, **characterized in that** said means for determining (12, 13) further includes a bit assigning unit (13) for assigning bits to each of said blocks in a fixed range of said image according to minimum values of the variable obtained by said accumulator (12).

**Patentansprüche**

1. Einrichtung zur Bildkodierung, die ein angelegtes digitales Bildsignal in ein kodiertes Ausgangsbildsignal wandelt, indem das Bildsignal in eine Mehrzahl aus Bildpunktwertsignalen bestehende Blöcken geteilt wird,
   **dadurch gekennzeichnet,** daß die Einrichtung aufweist:

   Mittel (10) zur Zuweisung eines Anfangswertes der Informationsverteilung zu jedem der Blöcke als eine Funktion von Bildpunktwertsignalen, und zum Erhalten einer Klassifizierungstabelle k(m, j), die aufsteigende Klassifizierungswerte von Klassifizierungen k anzeigt, die jeweils auf Grundlage einer Variablen berechnet wurden, die sich auf den Anfangswert der Informationsverteilung bezieht;
   wobei m = 0, 1, ..., M-1, j = 0, 1 L-2, mit M als Anzahl der zuweisbaren Anfangswerte der Informationsverteilung und L als Anzahl von Bitzuweisungswerten, die in einem Bereich von 0 bis L-1 laufen und dem Anfangswert der Informationsverteilung zuweisbar sind;
   Mittel (11) zur Erzeugung eines Histogramms der Klassifizierungen k entsprechend aufsteigender Klassifizierungswerte unter Verwendung der Klassifizierungstabelle k(m, j), wobei eine Klasse k(m, j) eine beginnend mit dem kleinsten Wert der Variablen in einer aufsteigenden Reihenfolge gezählte Klasse ist;
   Mittel (12, 13) zur Bestimmung eines Parameters k' aus dem Histogramm, um für jeden der Blöcke die Anzahl der im Ausgangsbildsignal enthaltenen kodierten Bits zu kontrollieren, wobei der Parameter k' eine minimale Klasse ist, bei der eine akkumulierte Wertsumme des Histogramms gleich zu einer gesamten Bitzahl ist oder diese übersteigt, und wobei die Bitzuweisung wie folgt gewählt ist:
   0 für k' < k(m, 0),
   j+1 (j = 0, 1, ..., L-3) für k(m, j) ≤ k' < k(m, j+1),
   L-1 für k(m, L-2) ≤ k'.

2. Einrichtung zur Bildkodierung nach Anspruch 1, **dadurch gekennzeichnet,** daß die Variable eine Variable A(m, j) ist, die sich unabhängig von dem angelegten Bildsignal zu:

$$A (m, j) = -\beta (m) + 1/2 + j$$

   ergibt, wobei m = 0, 1, ..., M-1, j = 0, 1, ..., L-2, β (m) die Anzahl der einem bestimmten Block zugewiesenen Bits ist und L und M Ganzzahlen sind.

3. Einrichtung zur Bildkodierung nach Anspruch 1 oder 2, **dadurch gekennzeichnet,** daß das Mittel (10) zur Zuweisung eine arithmetische Einheit ist, um Quantisierungsindizes zu berechnen, indem akkumulierte Werte der Variablen auf bestimmte Pegel quantisiert werden.

**4.** Einrichtung zur Bildkodierung nach einem der Ansprüche 1 bis 3, **dadurch gekennzeichnet,** daß das Mittel (11) zur Erzeugung ein Zähler zur Erzeugung von Histogrammen von akkumulierten Werten der Variablen in einem vorgegebenen Bereich des Bildes ist.

**5.** Einrichtung zur Bildkodierung nach Anspruch 4, **dadurch gekennzeichnet,** daß der vorgegebene Bereich ein Halbbild, ein Vollbild oder ein anderer Bei reich in einem Bild ist.

**6.** Einrichtung zur Bildkodierung nach einem der Ansprüche 1 bis 5, **dadurch gekennzeichnet,** daß das Mittel (12, 13) zur Bestimmung einen Akkumulator (12) enthält, um einen minimalen akkumulierten Wert der Variablen zu erhalten, der einem bestimmten Gleichungsausdruck genügt, während das erzeugte Histogramm in aufsteigender Reihenfolge der Werte der Variablen akkumuliert wird.

**7.** Einrichtung zur Bildkodierung nach Anspruch 6, **dadurch gekennzeichnet,** daß das Mittel (12, 13) zur Bestimmung weiter eine Bitzuweisungseinheit (13) enthält, um entsprechend von Minimalwerten der Variablen, die von dem Akkumulator (12) erhalten wurden, zu jedem der Blöcke in einem festgesetzten Bereich des Bildes Bits zuzuweisen.

## Revendications

**1.** Dispositif de codage d'image destiné à transformer un signal d'image numérique d'entrée en signal de sortie d'image encodée par division du signal d'image en une pluralité de blocs de signaux de valeurs de pixels, **caractérisé en ce que** le dispositif comporte :

un moyen (10) destiné à affecter une valeur initiale de distribution d'informations à chacun desdits blocs en fonction des signaux de valeurs de pixels, et destiné à obtenir une table de rang k(m,,j) représentant les rangs par ordre croissant des rangs k, chacun d'eux étant calculé à partir de la valeur d'une variable relative à la valeur initiale de distribution d'informations,
où m=0, 1, ..., M-1, j=0, 1, **...,** L-2, M est le nombre de valeurs initiales de distribution d'informations pouvant être affectées, et L est le nombre de valeurs d'affectation de bits comprises en 0 et L-1 et pouvant être affectées à ladite valeur initiale de distribution d'informations ;
un moyen (11) de formation d'histogramme desdits rangs k en fonction de l'ordre croissant des rangs en utilisant ladite table de rangs k(m,j), un rang k(m,j) étant compté par ordre croissant à partir des valeurs les plus faibles de ladite variable ;
un moyen (12, 13) de détermination d'un paramètre k' de l'histogramme à contrôler, pour chacun desdits blocs, le nombre de bits codés figurant dans le signal de sortie d'image, le paramètre k' étant un rang minimum pour lequel une somme de valeurs accumulées de l'histogramme est égale ou supérieure à un nombre total de bits, et l'affectation de bit est :
0 pour k' < k(m,0),
j+1 (j=0, 1, ..., L-3) pour k(m,j) $\leq$ k' < k(m,j+1)
L-1 pour k(m,L-2) $\leq$ k'.

**2.** Dispositif de codage d'image selon la revendication 1, **caractérisé en ce que** ladite variable est une variable A(m,j) exprimée indépendamment dudit signal d'image d'entrée sous la forme :

$$A(m,j) = -\beta (m) +1/2 + j,$$

où m=0, 1, ..., M-1, j=0, 1, ..., L-2, $\beta$ (m) correspond aux bits initiaux affectés à un bloc donné et M et L sont des entiers.

**3.** Dispositif de codage d'image selon la revendication 1 ou 2, **caractérisé en ce que** ledit moyen d'affectation (10) est une unité arithmétique destinée à calculer les indices de quantification par quantification des valeurs accumulées de la variable selon des niveaux prédéterminés.

**4.** Dispositif de codage d'image selon l'une quelconque des revendications 1 à 3, **caractérisé en ce que** ledit moyen de formation (11) est un compteur destiné à former des histogrammes de valeurs accumulées de la variable dans un intervalle fixe de l'image.

5. Dispositif de codage d'image selon la revendication 4, **caractérisé en ce que** ledit intervalle fixe est préférablement au choix une trame, une image complète ou toute autre zone d'une image.

6. Dispositif de codage d'image selon l'une quelconque des revendications 1 à 5, **caractérisé en ce que** ledit moyen de détermination (12, 13) comporte un accumulateur (12) destiné à obtenir une valeur accumulée minimale de la variable qui satisfasse à une expression relationnelle prédéterminée en effectuant l'accumulation dudit histogramme formé par ordre croissant des valeurs de la variable.

7. Dispositif de codage d'image selon la revendication 6, **caractérisé en ce que** ledit moyen de détermination (12, 13) inclut en outre une unité d'affectation de bits (13) destinée à affecter des bits à chacun desdits blocs d'un intervalle fixe de ladite image en fonction des valeurs minimales de la variable obtenues par ledit accumulateur (12).

# Fig. 1

# Fig.2

```
        START

              S1
  FOR ALL VALUES OF k
  hist(k)=0, i=0

              S2
         j = 0

              S3
   k = k(m(i),j)
   hist(k) = hist(k)+1

              S4
         j = j + 1

              S5
  YES   IS  j < L-1?
          NO
              S6
         i = i + 1

              S7
  YES   IS  i < N?
          NO

         END
```

# Fig.3

START

T1

$K = 0$
$sum = 0$

T2

$sum = sum + hist(k)$

T3

$sum \geqq B?$

YES

NO

T4

$k = k + 1$

T5

$k' = k$

END

# Fig. 4

hist(k)

m2

0  1  2  k'

k

▨ AREA OF HATCHED AREA = B

EP 0 529 588 B1

*Fig.5*

```
                    ┌──────────┐
                    │  START   │
                    └────┬─────┘
                         ▼
                ┌─────────────┐
                │    m = 0    │────U1
                └──────┬──────┘
                       ▼
                ┌─────────────┐
                │   j = -1    │────U2
                └──────┬──────┘
                       ▼                        U3
              ╱────────────────────╲  YES
             ╱ IS k(m,j)≦k'<k(m,j+1)? ╲──────────┐
             ╲────────────────────────╱          │
                       │ NO                       │
                       ▼                          │
                ┌─────────────┐                   │
                │  j = j+1    │────U4             │
                └──────┬──────┘                   │
                       └──────────────────────────┤
                                                  ▼
                       ┌─────────────┐
                       │  q(m) = j+1 │────U5
                       └──────┬──────┘
                              ▼                 U6
                     ╱────────────────╲  NO              U8
                    ╱  IS k'=k(m,j)?   ╲────────────┐
                    ╲──────────────────╱            ▼
                       │ YES                  ┌─────────────┐
                       ▼           U7         │  flag(m)=0  │
                ┌─────────────┐               └──────┬──────┘
                │  flag(m)=1  │                      │
                └──────┬──────┘◄─────────────────────┘
                       ▼
                ┌─────────────┐
                │   m = m+1   │────U9
                └──────┬──────┘
                       ▼               U10
          YES ╱────────────────╲
         ┌────╲   IS m<M?       ╱
         │     ╲───────────────╱
         │          │ NO
         │          ▼              U11
         │   ┌─────────────┐
         │   │    i = 0    │
         │   └──────┬──────┘
         │          ▼              U12
         │   ┌─────────────┐
         │   │  OBTAIN m2  │
         │   └──────┬──────┘       U13
         │          ▼
         │ ╱────────────────╲  NO
         │╱   IS m2>0?       ╲────────────┐
         ╲────────────────────╱           │
                  │ YES      U14          │
                  ▼                       │
         ╱────────────────╲  NO           │
        ╱ IS flag(m(i))=1? ╲──────────────┤
        ╲──────────────────╱              │
                  │ YES    U15            ▼          U16
                  ▼                  ┌──────────────┐
         ┌──────────────────┐        │ b(i) = q(m(i))│
         │ b(i)=q(m(i))-1   │        └──────┬───────┘
         │ m2=m2-1          │               │
         └────────┬─────────┘◄──────────────┘
                  ▼
           ┌─────────────┐
           │  i = i+1    │────U17
           └──────┬──────┘
                  ▼              U18
      YES ╱────────────────╲
    ┌─────╲   IS i<N?       ╱
    │      ╲───────────────╱
    │           │ NO
    │           ▼
    │    ┌──────────┐
    │    │   END    │
    │    └──────────┘
```

# Fig. 6

# Fig. 7